# EUROPEAN PATENT SPECIFICATION

(11) **EP 0 279 516 B1**
(45) Date of publication and mention of the grant of the patent: **30.06.1993**
(21) Application number: 88300437.6
(22) Date of filing: 20.01.1988
(51) Int. Cl.: C08L 63/00, C08G 59/38, C08G 59/42, B29C 33/40

(54) **High temperature epoxy resin tooling composition**
Für die Herstellung von hochtemperaturbeständigen Formen verwendbare Epoxidharzzusammensetzung
Composition pour la fabrication de moules résistant à de hautes températures à base de résines époxydes

(30) Priority: 18.02.1987 US 15997
(43) Date of publication of application: 24.08.1988
(73) Proprietor: GENERAL MOTORS CORPORATION, Detroit Michigan 48202 (US)
(72) Inventor: Atkins, Richard P., Utica Michigan 48087 (US); Wang, Chen-Shih, Troy Michigan 48098 (US)
(74) Representative: Denton, Michael John

(56) References cited:
- EP-A- 0 077 142
- DE-A- 1 956 066
- Wpil-File Supplier, AN= 85-213866/35, 29.09.79

## Description

### Field of the Invention

The present invention generally relates to a high temperature epoxy resin tooling composition for cast-to-size tools used in injection moulding and sheet-moulding compound (SMC) moulding of plastics materials, more particularly, it is concerned with a tough, high temperature epoxy resin tooling composition for making cast-to-size tools for use in injection-moulding and SMC moulding at mould temperatures up to 200°C.

### Background of the Invention

Injection-moulding tools and SMC moulding tools traditionally have been made of high strength tool steel because of its rigidity and durability. In the automotive industry, moulds made of tool steel have been used to injection-mould or compression-mould automobile parts made of either thermoplastics or thermoset plastics materials. However, these steel moulds are very costly due to the extensive machining required to make them.

It is a common practice in the automotive industry that before a new car is put into production, a limited number of concept or prototype cars are first built for testing. Designing forming tools with tool steel for moulding plastic parts used in these prototype cars would not be practical for several reasons. First, a prototype car has to be built in a relatively short time which prohibits the use of tool steel for forming tools due to the extensive machining required. Secondly, the design of a prototype car is changed many times from the original design before it reaches a final production model. This means that many forming tools will have to be built before the design of a specific part is finalized. This makes the building of a steel forming tool prohibitive for cost reasons.

To remedy these problems, castable polymeric materials have been used to make prototype sheet-metal stamping tools in recent years. One of these materials is epoxy resin. Epoxy resin compositions based on a bisphenol A epoxide, an anhydride curing agent and an imidazole catalyst are already known. For instance, United States Patent No.4,423,094 (Dearlove et al) discloses a tough, durable epoxy-novolac material for use in making sheet-metal stamping dies. While this material exhibits good mechanical strength for tooling purposes, it can be used at mould temperatures of up to 150°C only. This limits its use to sheet-metal stamping tools. In most injection-moulding and SMC moulding tools, the tooling material for the mould should remain stable at temperatures higher than 150°C. Another drawback of the epoxy-novolac tooling composition disclosed in US-A-4,423,094 is the high cost of the epoxy-novolac resin.

It is therefore an object of the present invention to provide an epoxy resin tooling composition that can be used in injection-moulding or SMC moulding tools at mould temperatures higher than 150°C.

It is another object of the present invention to provide an epoxy resin tooling composition that can be used in a cast-to-size injection-moulding or SMC moulding tool at mould temperatures higher than 150°C.

It is yet another object of the present invention to provide an epoxy resin tooling composition of high compressive strength that can be used in a cast-to-size injection-moulding or SMC moulding tool at mould temperatures higher than 150°C.

### Summary of the Invention

A tough, durable, high-temperature epoxy resin tooling composition for use in cast-to-size forming tools according to the present invention comprises 100 parts by weight of a diglycidyl ether of bisphenol-A epoxy resin, 20 to 30 parts by weight of triglycidyl p-aminophenol, 100 to 115 parts by weight of nadic methylanhydride curing agent, and 2 to 6 parts by weight of 1-(2-hydroxypropyl)-2-methylimidazole catalyst.

The present invention also includes a filled epoxy resin composition formed from a mixture of the aforesaid epoxy resin tooling composition and about 670 parts by weight of an interstitially-matched filler system, said filler system comprising filler particles having diameters that are interstitially-matched such that a maximum amount of fillers may be used without sacrificing the pourability of said composition.

In accordance with a preferred practice of the present invention, a novel epoxy resin tooling composition that can be used in casting high-temperature injection-moulding or SMC moulding tools is provided. The epoxy resin tools cast from this composition can be used at moulding temperatures higher than 150°C. Based on a heat-deflection temperature of 181°C obtained on the resin composition of the invention, a maximum use temperature of 200°C is recommended for a moulding tool cast from the composition when 75 volume percent of filler is added. The viscosity of the epoxy resin tooling composition is sufficiently low that, even at filler loadings as high as 75 volume percent, it can still be poured into a mould having thin sections and bulk sections. The term "bulk section" in an epoxy resin tool is defined as a section having a thickness of much larger than 6.35 mm (1/4 inch). The term "thin section" is defined as a section having a thickness of less than 6.35 mm (1/4 inch).

It has previously been discovered that, in order to cast a bulk section tool, the reaction exothermic heat given out by the epoxy resin during curing must be controlled. Since the amount of exothermic heat per unit weight of epoxy resin is fixed, a unique casting method has been devised to avoid any potential over-heating problem. First, to minimize the total amount of exothermic heat produced by the epoxy resin curing reaction, the least amount of epoxy resin is used by utilizing a system of interstitially-matched fillers. Other workers have attempted to use large amounts of fillers in rapid cure epoxy resin systems without success. This is because that, when filler loadings above a critical level are added to an epoxy resin casting composition, the viscosity of the composition increases to such an extent that it is no longer pourable.

It has been discovered that, by interstitially-matching the particle size of the fillers, the viscosity of the filled epoxy resin composition can be maintained at a constant level even at very high filler loadings. By interstitially-matching the fillers, filler particles of different sizes are carefully selected so that smaller particles would fit in the interstices between larger particles. When this critical requirement is met, a total filler loading as high as 75 volume percent may be used whilst the pourability of the epoxy resin composition is maintained.

Another benefit of using high loadings of fillers is that the fillers serve as a heat buffer absorbing the exothermic heat evolved from the curing reaction. As a result, potential formations of thermal shocks or localized heat pockets which may lead to excessive shrinkage or deformation in the tool are avoided.

The novel epoxy resin composition of the present invention comprises a diglycidyl ether of bisphenol-A epoxy resin, tri-glycidyl p-aminophenol, nadic methylanhydride curing agent, 1-(2-hydroxypropyl)-2 methylimidazole catalyst, and, optionally an interstitially-matched filler system. The exact combination of the unique composition of the two epoxy resins, the anhydride curing agent, and the imidazole catalyst is critically important. Replacing any one component with another ingredient would result in a severe loss of physical properties such as the heat deflection temperature and the tensile properties. Three interstitially-matched filler systems were used in preferred embodiments of the present invention. When used in an amount as high as 75 volume percent of the total composition, the exothermic heat evolved from the curing reaction of the composition is significantly reduced. The novel epoxy resin tooling composition can be cured in two steps. The first step of pre-cure can be carried out either at room temperature for 2 days or at 60°C for 8 hours. After the pre-cure, the mould-making frames are removed and the tool is then post-cured at 180°C for 2 hours.

Other objects, features and advantages of the present invention will become apparent upon consideration of the specification that follows.

### Description of the Preferred Embodiments

The practice of using an interstitially-matched filler system in the present invention, in which the smaller particulate fillers fit in the interstitial spacings between the larger and medium size particulate fillers was first developed by using a commercial epoxy resin system. This commercial epoxy resin system, Magnolia 6013A, was obtained from the Magnolia Plastics Company, U.S.A. It contains 27 volume percent iron particles of 20 micrometre (20 micron) size. To test the interstitially-matched filler system used in the present invention, a second filler of iron particles having 126 micrometre (126 micron) size was added to observe the effect of this second filler on the viscosity. A drastic increase in viscosity from 70 Pas (70 × 10³ centipoise) at 27 volume percent iron particle loading to 470 Pas (470 × 10³ centipoise) at 33 volume percent iron particle loading was observed, i.e., a seven-fold increase in viscosity caused by an 8 volume percent increase in the iron powder loading. Experience indicated that, when a viscosity of 150 Pas (150 × 10³ centipoise) is reached, the fluidity of the casting composition is reduced to such an extent that the composition is no longer pourable.

An interstitially-matched filler system was next tried by using an iron particle having particle size of 279 micrometres (279 microns). By gradually increasing the total iron powder loading to 40 volume percent, the viscosity of the system is increased from 70 Pas (70 × 10³ centipoise) to only 100 Pas (100 × 10³ centipoise). At 100 Pas (100 × 10³ centipoise) viscosity, the casting composition can be poured into thin mould sections with no flow problem.

Compounding for the preferred novel composition of the invention was carried out in a Ross mixer. The first epoxy resin used in the preferred composition is a diglycidyl ether supplied by the Ciba-Geigy Co, U.S.A. under the tradename of Araldite (R.T.M.) 6005. This epoxy resin has an approximate epoxy resin equivalent weight of about 180 to 196 and a viscosity at 25°C in the range of about 7.5 to 9.5 Pas (7500 to 9500 centipoise). Other commercial products that are substantially equal to this epoxy resin compound are Dow Chemical D.E.R. (R.T.M.) 330 resin, Celanese Epi-Rez (R.T.M.) 509, and Shell Epon (R.T.M.) 826.

The second epoxy resin ingredient used in the preferred composition is a trifunctional aromatic epoxy resin of triglycidyl p-aminophenol supplied by the Ciba-Geigy Co., U.S.A. under the tradename of Araldite (R.T.M.) 0510. This epoxy resin has an approximate epoxy resin equivalent weight of about 95 to 107 and a viscosity at 25oC in the range of about o.55 to 0.85 Pas (550 to 850 centipoise). Another commercial product which has been found to work equally well is Tactix (R.T.M.) 742 supplied by the Dow Chemical Company., U.S.A.

The preferred novel composition of the present invention can be pre-cured at room temperature in approximately 2 days or at 60°C in approximately 8 hours. This pre-cure step allows the mould frame to be made of conventional materials such as wood, plaster, and clay by a conventional frame-making technique. After this initial cure, the frame is taken apart and the wood, plaster, or clay removed. The mould is then post-cured at 180°C for 2 hours, with no dimensional change.

To accomplish this two-stage curing process, an anhydride curing agent and an imidazole accelerator have been used. The anhydride used was nadic methylanhydride supplied by the Ciba-Geigy Co., U.S.A. under the designation of 'hardener 906'. It has a viscosity at 25°C of 0.175 to 0.275 Pas (175 to 275 centipoise), an anhydride content of 93% and a boiling point of 278°C. The imidazole accelerator used was a 1-2-hydroxypropyl-2-methylimidazole supplied by Archem Co., U.S.A. under the designation of AP-5. It has a room temperature viscosity of 1 Pas (1000 centipoise and a boiling point of 241°C (465°F).

Formulations and physical properties of six compositions, including a novel composition according to the present invention as composition No.1, are shown in table 1, the composition quantities being in parts by weight.

**Table I**

| Composition | I | II | III | IV | V | VI |
|---|---|---|---|---|---|---|
| Araldite (R.T.M.) 6005 | 100 | 100 | 100 | 100 | 100 | 100 |
| Araldite (R.T.M.) 0510 | 25 | - | - | - | 25 | 25 |
| Epi-Rez (R.T.M.) 5048 | - | - | 25 | - | - | - |
| Araldite (R.T.M.) MY-720 | - | - | - | 25 | - | - |
| Hardener 906 | 112 | 112 | 112 | 112 | - | 112 |
| MTPHA | - | - | - | - | 112 | - |
| AP-5 | 4 | 4 | 4 | 4 | 4 | - |
| XU-213 | - | - | - | - | - | 4 |

| Composition | I | II | III | IV | V | VI |
|---|---|---|---|---|---|---|
| HDT,°C | 181 | 155 | 155 | 181 | 147 | 153 |
| Tens.Strength,MPa | 87.0 | 61.4 | 52.7 | 34.6 | 83.3 | 67.1 |
| Tens.Modulus, GPa | 2.5 | 2.8 | 3.3 | 2.9 | 3.4 | 3.0 |
| Comp.Strength,Mpa | 122.5 | 124.2 | 112.4 | 126.2 | 113.9 | 126.2 |
| Comp.Modulus, GPa | 2.0 | 2.2 | 1.8 | 1.9 | 2.3 | 2.3 |

The different ingredients in the comparative examples shown in Table I are described as follows. Epi-Rez (R.T.M.) 5048 is a triglycidyl aliphatic ether supplied by the Celanese Co., U.S.A. Araldite (R.T.M.) MY-720 is a tetraglycidyl methylenedianiline supplied by the Ciba-Geigy Co., U.S.A. MTPHA is methyltetrahydrophthalic anhydride, commercially available from the Archem Co. XU-213 is a boron trichloride amine complex supplied by the Ciba-Geigy Co., U.S.A.

The physical properties of the six epoxy resin compositions were determined by following standard ASTM test procedures. For instance, the heat deflection temperature (HDT) was determined by ASTM D-648 at 1820.22 kPa (264 psi). The tensile strength (Tens. Strength) and tensile modulus (Tens. Modulus) were determined by ASTM D-638. The compressive strength (Comp. Strength) and compressive modulus (Comp. Modulus) were determined by ASTM D-695.

It has been found that the use of other materials to replace any of the ingredients in composition I results in significant loss in properties. For example, if methyltetrahydrophthalic anhydride (MTHPA) is used instead of nadic methylanhydride (NMA), the HDT drops to 147°C, and the tensile strength drops 5%. If AP-5 is replaced by another catalyst such as benzyl dimethlyamine (BDMA)(not shown in Table I) or a boron trichloride amine complex, the HDTs drop to 162°C and 153°C, respectively, and the tensile strength drops 23%. If the tri-functional aromatic epoxy resin Araldite (R.T.M.) 0510 is replaced by another multi-functional epoxy resin such as a tetra-functional aromatic epoxy resin Araldite (R.T.M.) MY-720 or an aliphatic epoxy resin Epi-Rez (R.T.M.) 5048, the HDT is lowered to 155°C with 5048, and the tensile strength drops 40% with MY-720. The use of other liquid epoxy resins of similar molecular weight to Araldite (R.T.M.) 6005 such as Dow D.E.R. (R.T.M.) 330 or Epi-Rez (R.T.M.) 509 does not affect the properties.

Additionally, the composition without NMA, and cured with BDMA or boron trihalide, would require much higher initial cure temperature (<110°C), which would damage the frame-making materials, and would also require a longer post-cure. This would still result in a lower HDT (about 150°C). If cured with only a substituted imidazole such as AP-5, there is a risk of an uncontrollable exotherm developing.

The amounts of the ingredients used in Composition I can be varied in the ranges of 20-30 parts by weight for 0510, 100-115 parts by weight for 906, and 2-6 parts by weight for AP-5. The 6005 resin can be replaced with other epoxy resins of similar molecular weight, such as Dow D.E.R. (R.T.M.) 330 or Celanese Epi-Rez (R.T.M.) 509. It may also be replaced with Novalac resins such as D.E.N. (R.T.M.) 431. The multi-functional epoxy resin 0510 can be replaced with a new material, Tactix (R.T.M.) 742, supplied by the Dow Chemical Company, U.S.A.

The interstitially-matched filler system used in the novel epoxy resin composition of the invention comprises a mixture of rigid particulate fillers having different particle sizes in the range between 0.5 and 200 micrometres. The first interstitially-matched filler system comprises two silicon carbide particles and one silica particle. The parts by weight of each filler used is shown in Table II as IA. The silicon carbide particles were selected for their superior abrasion-resistance resulting in a forming tool having superior durability. The silica particle was selected for its rigidity and low cost. Two different sized particles of silicon carbide were used. They are both available commercially from the Sohio Company., U.S.A. Silicon carbide SiC 100 has particle sizes in the range between 63 to 203 micrometres (63 to 203 microns) with an average particle size of 122 micrometres (122 microns). SiC 400 has particle sizes in the range between 1 to 25 micrometres (1 to 25 microns) with an average particle size of 4 micrometres (4 microns). A fine particle size silica Si-21 commercially available from Whittaker, Clark & Daniels Inc., U.S.A. was selected to fit in between the larger SiC particles. Si-21 has a particle size distribution of 51% <5 micrometres (<5 microns), 90% < 15 micrometres (<15 microns) and an average particle size of 2 micrometres (2 microns).

Two other filler systems that have also been found adequate for the epoxy resin composition, IB and IC, are shown in Table II. In both systems, either silica alone or silica and aluminium in combination may be used in place of silicon carbide and silica. Si-85 is approximately 0.158 mm (85 mesh) washed silica sand supplied by the Weldron Silica Co., U.S.A. AL-120 is an aluminium powder supplied by the Alcoa Co., U.S.A. It has an average particle size between 25 to 30 micrometres (25 to 30 microns) with 95% smaller than 44 micrometres (44 micron) and containing 99.7% aluminium. Si-23 is another silica commercially available from Whittaker, Clark & Daniels Inc., U.S.A. It has a particle size distribution of 80% < 200 mesh, 70% < 325 mesh and an average size of 125 micrometres (125 microns).

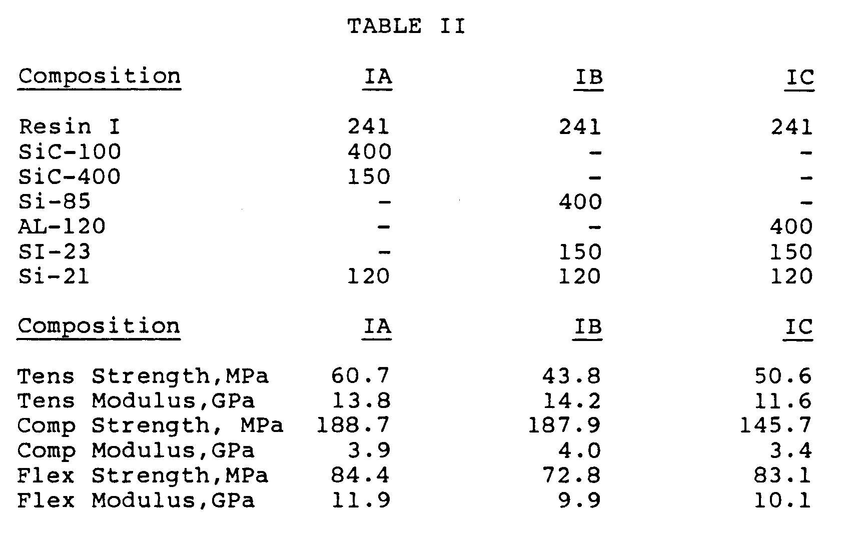

To compound the novel epoxy resin formulation of the invention, all the fillers are mixed together in a rolling drum mixer. After each component filler is weighed according to its part by weight, the fillers are put into a drum and then rolled in the mixer for a period of 3 hours. The mixing speed is approximately 10 to 20 revolutions per minute.

Suitable amounts of epoxy resins, curing agent and catalyst are then weighed and poured into a stainless steel bowl in a Ross mixer. A pre-mixed filler system is then added to the stainless-steel bowl. The total ingredients are mixed by a motor-driven mixing blade under 30 inches of vacuum for 1 hour. The vacuum was applied to de-gas any air bubbles generated during the mixing process. The mixed epoxy resin formulation has a shelf-life of approximately 2 days.

The procedure for casting a plastics forming tool used in a sheet-metal stamping process is adequately described in United States Patent 4,601,867 issued July 22, 1986. When casting a large size of forming tool, other physical reinforcement such as a steel wire mesh may also be used to improve the structural integrity of the mould.

The novel high temperature epoxy resin casting composition of the present invention can be pre-cured either at room temperature for 2 days or at 60°C for 8 hours, then post-cured at 180°C for 2 hours. When filled to a level of 75 volume percent filler content, it can be used at mould temperatures as high as 200°C. This is a significant improvement over the commercially available epoxy resin tooling compounds which are recommended for a maximum use temperature of 150°C only. The novel composition does not contain aromatic amines, which are generally considered to be a toxicological hazard. Furthermore, the interstitially-matched filler system enables the use of very high loadings of fillers whilst maintaining the fluidity of the filled composition.

Whilst the invention has been described in terms of three specific embodiments thereof, other forms could be readily adopted by one skilled in the art to achieve the same results. For instance, any combination of other suitable filler particles having suitable particle sizes may be combined to form the interstitially-matched filler system. The only critical requirement to be met is that they must be interstitially-matched such that even when used at a high volume percent they do not significantly increase the viscosity of the total blended epoxy resin system. Other filler particles having good rigidity and abrasion resistance may suitably be used in place of silicon carbide, silica, and aluminium particles.

Thus the present invention is a unique combination of reactants, curing agent and catalyst in an epoxy resin casting composition to achieve both a high heat deflection temperature and high tensile strength in moulds made therefrom. It provides an inexpensive and quick way of making prototype toolings, since a tool can be made in a few days at a fraction of the cost of a similar metal tool.

## Claims

1. A tough, durable, high-temperature epoxy resin tooling composition for use in cast-to-size forming tools, characterised in that the composition comprises 100 parts by weight of a diglycidyl ether of bisphenol-A epoxy resin, 20 to 30 parts by weight of triglycidyl p-aminophenol, 100 to 115 parts by weight of nadic methylanhydride curing agent, and 2 to 6 parts by weight of 1-(2-hydroxypropyl)-2-methylimidazole catalyst.

2. A tough, durable, high temperature epoxy resin tooling composition characterised in that the composition according to claim 1 is mixed with up to about 670 parts by weight of an interstitially-matched filler system, said filler system comprising filler particles having diameters that are interstitially-matched such that a maximum amount of fillers may be used without sacrificing the pourability of said composition.

3. A tough, durable, high temperature epoxy resin tooling composition according to claim 2, characterised in that the interstitially-matched filler system comprises a mixture of rigid particulate fillers having different particle sizes in the range between 0.5 to 200 micrometres.

4. A tough, durable, high temperature epoxy resin tooling composition according to claim 2 or 3, characterised in that the composition contains about 400 parts by weight of silicon carbide particles having particle sizes in the range between 60 to 200 micrometres, about 150 parts by weight of silicon carbide particles having particle sizes in the range between 1 to 25 micrometres, and about 120 parts by weight of silica particles having particle sizes in the range between 1 to 15 micrometres.

5. A tough, durable, high temperature epoxy resin tooling composition according to claim 2 or 3, characterised in that the composition contains about 400 parts by weight of silica particles having an average particle size of 158 micrometres (85 mesh), about 150 parts by weight of silica particles having an average particle size of 125 micrometres, and about 120 parts by weight of silica particles having an average particle size of 2 micrometres.

6. A tough, durable, high temperature epoxy resin tooling composition according to claim 2 or 3, characterised in that the composition contains about 400 parts by weight of aluminium particles having an average particle size between 25 to 30 micrometres, about 150 parts by weight of silica particles having an average particle size of 125 micrometres, and about 120 parts by weight of silica particles having an average particle size of 2 micrometres.

7. A tough, durable, high temperature cast-to-size epoxy tool which is a reaction product of a tough, durable, high temperature epoxy resin tooling composition according to any one of the preceding claims.

## Patentansprüche

1. Zähe, dauerstandsfeste, hochtemperaturbeständige Epoxidharzzusammensetzung für Verfomungswerkzeuge zur Verwendung bei kalibrierenden Verformungswerkzeugen, dadurch gekennzeichnet, daß die Zusammensetzung umfaßt: 100 Gew.-Teile eines Diglycidylethers von Bisphenol-A-Epoxidharz, 20 bis 30 Gew.-Teile Triglycidyl-p-aminophenol, 100 bis 115 Gew.-Teile Nadinmethylanhydrid-Aushärtmittel und 2 bis 6 Gew.-Teile 1-(2-Hydroxypropyl)-2-methylimidazolkatalysator.

2. Zähe, dauerstandsfeste, hochtemperaturbeständige Epoxidharzzusammensetzung für Verfomungswerkzeuge, dadurch gekennzeichnet, daß die Zusammensetzung nach Anspruch 1 mit bis zu etwa 670 Gew.-Teilen eines an die Füllung von Zwischenräumen angepaßten Füllstoffsystems vermischt ist, wobei dieses Füllstoffsystem Füllstoffteilchen umfaßt, welche Durchmesser haben, die für die Füllung von Zwischenräumen angepaßt sind, so daß eine maximale Menge an Füllstoffen eingesetzt werden kann, ohne die Gießfähigkeit dieser Zusammensetzung zu opfern.

3. Zähe, dauerstandsfeste, hochtemperaturbeständige Epoxidharzzusammensetzung für verfomungswerkzeuge nach Anspruch 2, dadurch gekennzeichnet, daß das an die Füllung von Zwischenräumen angepaßte Füllstoffsystem eine Mischung von starren, teilchenförmigen Füllstoffen mit unterschiedlichen Teilchengrößen in dem Bereich zwischen 0,5 bis 200 Mikrometer umfaßt.

4. Zähe, dauerstandsfeste, hochtemperaturbeständige Epoxidharzzusammensetzung für Verfomungswerkzeuge nach Anspruch 2 oder 3, dadurch gekennzeichnet, daß die Zusammensetzung etwa 400 Gew.-Teile Siliziumkarbidteilchen mit Teilchengrößen im Bereich zwischen 60 und 200 Mikrometer, etwa 150 Gew.-Teile Siliziumkarbidteilchen mit Teilchengrößen im Bereich zwischen 1 bis 25 Mikrometer und etwa 120 Gew.-Teile Siliziumdioxidteilchen mit Teilchengrößen im Bereich zwischen 1 bis 15 Mikrometer enthält.

5. Zähe, dauerstandsfeste, hochtemperaturbeständige Epoxidharzzusammensetzung für Verfomungswerkzeuge nach Anspruch 2 oder 3, dadurch gekennzeichnet, daß die Zusammensetzung etwa 400 Gew.-Teile Siliziumdioxidteilchen mit einer Durchschnittsteilchengröße von 158 Mikrometer (85 mesh), etwa 150 Gew.-Teile Siliziumdioxidteilchen mit einer Durchschnittsteilchengröße von 125 Mikrometer und etwa 120 Gew.-Teile Siliziumdioxidteilchen mit einer Durchschnittsteilchengröße von 2 Mikrometer enthält.

6. Zähe, dauerstandsfeste, hochtemperaturbeständige Epoxidharzzusammensetzung für Verfomungswerkzeuge nach Anspruch 2 oder 3, dadurch gekennzeichnet, daß die Zusammensetzung etwa 400 Gew.-Teile Aluminiumteilchen mit einer Durchschnittsteilchengröße zwischen 25 bis 30 Mikrometer, etwa 150 Gew.-Teile Siliziumdioxidteilchen mit einer Durchschnittsteilchengröße von 125 Mikrometer und etwa 120 Gew.-Teile Siliziumdioxidteilchen mit einer Durchschnittsteilchengröße von 2 Mikrometer enthält.

7. Zähes, dauerstandfestes, kalibrierendes HochtemperaturEpoxid-Verformungswerkzeug, welches das Reaktionsprodukt einer zähen, dauerstandsfesten Epoxidharzzusammensetzung für Verformungswerkzeuge nach einem der vorhergehenden Ansprüche ist.

## Revendications

1. Composition pour outillage à base de résine époxy durable et tenace, résistante à haute température, destinée à être employée dans des outils de façonnage coulés sur mesure, caractérisée en ce que la composition comprend 100 parties en poids d'un éther de diglycidyle dérivé d'une résine de bisphénol-A-époxyde, de 20 à 30 parties en poids de triglycidyl p-aminophénol, de 100 à 115 parties en poids d'un agent durcisseur à base de méthylanhydride nadique, et de 2 à 6 parties en poids d'un catalyseur à base de 1-(2-hydroxypropyl)-2-méthylimidazole.

2. Composition pour outillage à base de résine époxy durable et tenace, résistante à haute température, caractérisée en ce que la composition de la revendication 1, est mélangée avec jusqu'à environ 670 parties en poids d'un système de charge à interstices comblés, ce système de charge comprenant des particules de charge ayant des diamètres correspondant aux interstices, de telle façon qu'une quantité maximum de charges puisse être employée sans réduire l'aptitude à l'écoulement de la composition.

3. Composition pour outillage à base de résine époxy durable et tenace, résistante à haute température, selon la revendication 2, caractérisée en ce que le système de charge à interstices comblés, comprend un mélange de charges particulaires rigides ayant différentes tailles particulaires variant de 0,5 à 200 micromètres.

4. Composition pour outillage à base de résine époxy durable et tenace, résistante à haute température, selon la revendication 2 ou 3, caractérisée en ce que la composition contient environ 400 parties en poids de particules de carbure de silicium ayant des tailles particulaires de 60 à 200 micromètres, environ 150 parties en poids de particules de carbure de silicium ayant des tailles particulaires de 1 à 25 micromètres, et environ 120 parties en poids de particules de silice ayant des tailles particulaires de 1 à 15 micromètres.

5. Composition pour outillage à base de résine époxy durable et tenace, résistante à haute température, selon la revendication 2 ou 3, caractérisée en ce que la composition contient environ 400 parties en poids de particules de silice ayant une taille particulaire moyenne de 158 micromètres (85 meshs), environ 150 parties en poids de particules de silice ayant une taille particulaire moyenne de 125 micromètres, et environ 120 parties en poids de particules de silice ayant une taille particulaire moyenne de 2 micromètres.

6. Composition pour outillage à base de résine époxy durable et tenace, résistante à haute température, selon la revendication 2 ou 3, caractérisée en ce que la composition contient environ 400 parties en poids de particules d'aluminium ayant une taille particulaire moyenne de 25 à 30 micromètres, environ 150 parties en poids de particules de silice ayant une taille particulaire moyenne de 125 micromètres et environ 120 parties en poids de particules de silice ayant une taille particulaire moyenne de 2 micromètres.

7. Outil coulé sur mesure à base de résine époxy durable et tenace, résistante à haute température, consistant en un produit de réaction d'une composition pour outillage à base de résine époxy durable et tenace, résistante à haute température, selon l'une quelconque des revendications précédentes.
